# EUROPEAN PATENT SPECIFICATION

(11) **EP 1 627 500 B1**
(45) Date of publication and mention of the grant of the patent: **26.09.2007**
(21) Application number: 04785555.6
(22) Date of filing: 13.05.2004
(51) Int. Cl.: H04L 12/28, H04L 29/06, H04L 12/56

(54) **SERVICE MANAGEMENT USING MULTIPLE SERVICE LOCATION MANAGERS**
DIENSTVERWALTUNG DURCH VERWENDUNG MEHRERER DIENSTORT-MANAGER
GESTION DE SERVICE AU MOYEN D'UNE PLURALITE DE GESTIONNAIRES DE LOCALISATION DE SERVICE

(30) Priority: 19.05.2003 US 471851 P; 30.10.2003 US 698196
(43) Date of publication of application: 22.02.2006
(73) Proprietor: Hewlett-Packard Development Company, L.P., Houston, Texas 77070 (US)
(72) Inventor: HARVILLE, Michael, Palo Alto, CA 94306 (US); COVELL, Michele, Palo Alto, CA 94306 (US); ANKCORN, John, Palo Alto, CA 94306 (US); APOSTOLOPOULOS, John, G., Palo Alto, CA 94303 (US); ROY, Sumit, Menlo Park, CA 94025 (US); SHEN, Bo, Fremont, CA 94539 (US); TAN, Wai-tian, Sunnyvale, CA 94087 (US); WEE, Susie, J., Palo Alto, CA 94303 (US)
(74) Representative: Exell, Jonathan Mark
(86) International application number: PCT/US2004/015192
(87) International publication number: WO 2004/105314

(56) References cited:
- US-A1- 2002 082 015
- US-B1- 6 412 004
- MA W-Y ET AL: "Content Services Network: The architecture and Protocols" PROCEEDING OF THE WCW'01, 20 June 2001 (2001-06-20), page 1, XP002256667 BOSTON, MA
- ROY S ET AL: "APPLICATION LEVEL HAND-OFF SUPPORT FOR MOBILE MEDIA TRANSCODING SESSIONS" PROCEEDINGS OF THE 12TH. INTERNATIONAL WORKSHOP ON NETWORK AND OPERATING SYSTEMS SUPPORT FOR DIGITAL AUDIO AND VIDEO. NOSSDAV 2002. MIAMI, FL, MAY 12 - 14, 2002, PROCEEDINGS OF THE INTERNATIONAL WORKSHOP ON NETWORK AND OPERATING SYSTEM SUPPORT FOR DI, 12 May 2002 (2002-05-12), pages 95-104, XP001171542 ISBN: 1-58113-512-2
- SUCEC J ET AL: "Location management for hierarchically organized mobile ad hoc networks" DAAB07-00-D-G505, vol. 2, 17 March 2002 (2002-03-17), pages 603-607, XP010585663

## Description

### RELATED APPLICATION

This application claims priority to the copending provisional patent application, Serial Number 60/471,851, Attorney Docket Number 200312253-1.PRO, entitled "Architecture for Distributing and Managing Streaming Media Services" that was filed May 19, 2003, and assigned to the assignee of the present application.

### BACKGROUND

There are networks wherein a client device can request delivery of a media file along with some processing done to that requested media file such as noise reduction. Once the request for media delivery and processing is received by a server, the media file is retrieved and then the requested processing is performed on that media file by the server. Once the processing is completely done, the server provides streaming delivery of the processed media file to the client device. However, there are disadvantages associated with this type of system.

For example, one of the disadvantages is that the user of the client device may have to wait quite a while if the server is trying to handle many separate requests for processing and streaming media files to different requesting client devices. Also, the streaming media file can be very large, and it can take a long time to complete the requested processing on the content prior to initiation of streaming delivery. This can be frustrating to the client device user especially if he or she is trying to complete something before a deadline.

US 6,412,004 discloses a metaserver for a multimedia distribution network that attempts to eliminate bottlenecks, reduce congestion and increase fault tolerance.

For these and other reasons, there is a need for the present invention.

### SUMMARY OF THE INVENTION

According to an aspect of the present invention, there is provided a method according to claim 1.

One embodiment of the invention includes a method for managing a streaming media service. The method includes receiving a request for a streaming media service from a client. It is noted that the streaming media service includes a media service component. Additionally, the method includes selecting a service location manager to which to provide the request from a plurality of service location managers. Furthermore, the method includes selecting a service provider to which to assign the media service component from a plurality of service providers of a network. Moreover, the method includes informing said selected service provider of its assignment to perform the media service component, thereby enabling the requested streaming media service to be performed on streaming media.

### BRIEF DESCRIPTION OF THE DRAWINGS

Figure 1 is a block diagram showing information flow in and out of a system for servicing and delivering content to a client device according to one embodiment of the present invention.
Figure 2 is a block diagram of a system for servicing content in accordance with an embodiment of the present invention.
Figure 3 is a flowchart of operations performed in accordance with an embodiment of the present invention for managing a streaming media service.

### DETAILED DESCRIPTION

Reference will now be made in detail to embodiments of the invention, examples of which are illustrated in the accompanying drawings. While the invention will be described in conjunction with embodiments, it will be understood that they are not intended to limit the invention to these embodiments. On the contrary, the invention is intended to cover alternatives, modifications and equivalents, which may be included within the scope of the invention as defined by the appended claims. Furthermore, in the following detailed description of the present invention, numerous specific details are set forth in order to provide a thorough understanding of the present invention. However, it will be evident to one of ordinary skill in the art that the present invention may be practiced without these specific details. In other instances, well known methods, procedures, components, and circuits have not been described in detail so as not to unnecessarily obscure aspects of the present invention.

Some portions of the detailed descriptions which follow are presented in terms of procedures, logic blocks, processing, and other symbolic representations of operations on data bits within a computing system or digital system memory. These descriptions and representations are the means used by those skilled in the data processing arts to most effectively convey the substance of their work to others skilled in the art. A procedure, logic block, process, etc., is herein, and generally, conceived to be a self-consistent sequence of operations or instructions leading to a desired result. The operations may involve physical manipulations of physical quantities. Usually, though not necessarily, these physical manipulations take the form of electrical or magnetic signals capable of being stored, transferred, combined, compared, and otherwise manipulated in a computing system or similar electronic computing device. For reasons of convenience, and with reference to common usage, these signals are referred to as bits, values, elements, symbols, characters, terms, numbers, or the like with reference to the present invention.

It should be borne in mind, however, that all of these terms are to be interpreted as referencing physical manipulations and quantities and are merely convenient labels and are to be interpreted further in view of terms commonly used in the art. Unless specifically stated otherwise as apparent from the following discussions, it is understood that throughout discussions of the present invention, discussions utilizing terms such as "receiving", "selecting", "informing", "notifying", "maintaining", "supervising", "performing", "redirecting", "estimating", "updating", "sending", "transferring", "determining", "applying", "processing", "deciding", "ascertaining", "transmitting", "providing", "recognizing", "generating", "utilizing", "removing", "excluding", "discarding", "implementing", "employing", "storing" or the like, refer to the action and processes of a computing system, or similar electronic computing device, that manipulates and transforms data. The data is represented as physical (electronic) quantities within the computing system's registers and memories and is transformed into other data similarly represented as physical quantities within the computing system's memories or registers or other such information storage, transmission, or display devices.

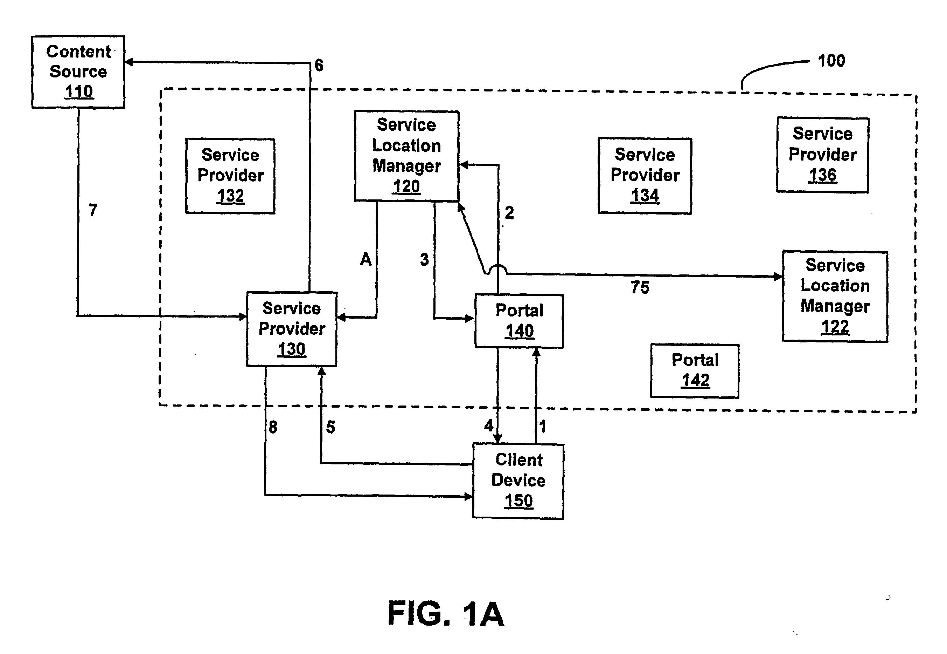

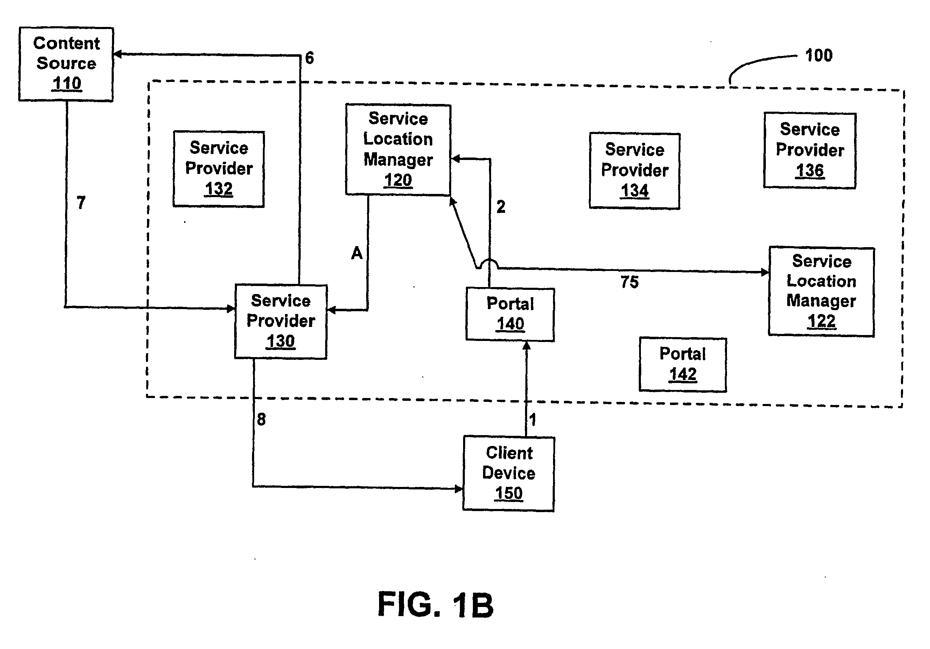

Figure 1 is a block diagram of a system 100 for servicing content from a content source 110 and for delivering the service result content to a client device 150 in accordance with an embodiment of the present invention. In overview, a client device 150 seeking a service contacts system 100 (e.g., portal 140). The client device 150 is redirected to a provider of the service (e.g.. service provider 130). Content from a content source (e.g., content source 110) is sent (e.g., streamed) to the client device via the service provider. Thus, in one embodiment, system 100 is for streaming media from a content source to a client device.

For purposes of the present application, streaming media as used herein means data that is communicated between network nodes in a continual manner. Examples include streaming audio and video, which may have strict time constraints on delivery. In these examples, if portions of these streams are delivered too late, the portions will be ignored due to tardiness (they are too late to effect what is being played by the client application and are therefore largely useless). Alternately, if portions of these streams are delivered too early, they will be lost due to buffer constraints within the service or client application. Other examples of data that is transmitted in a continual manner include streams of measurements or streams of experimental results. These types of streams include weather readings from remote sensors and temperature readings from cooling systems. In these examples, there are no strict time constraints on the delivery; however, the data transmission has a temporal component that is best served by seamlessly ongoing transmissions.

As such by using streaming media, the effect of service placement has a long-lived effect on resources of both the network and the server nodes. For example in transcoding a movie for viewing under streaming conditions, the data will span as much as two hours and therefore the transcoding session may span as much as two hours of the server time. For other types of streaming (e.g., instrument readings), the duration of the stream and of the service being done on the stream can be never-ending. The computational resources of the server node are effected for long periods of time with uncertain durations. Similarly, the network resources at the server node, on all the links between the server and the content provider, and between the server and the client machine, will be effected for long periods of time with uncertain durations. This is in marked contrast to more classic network transactions in which the data transfer is done in a block, often in less terms of seconds or minutes and in which the service performed on that data has a constrained duration.

In an embodiment that deals with streaming media, the following are some of the issues that need to be considered: that is, in comparison to web-based distribution, and web-based business transactions and/or downloads, streaming media has the following characteristics that need to be addressed:
a large amount of data - the end point of the data may not be known, and caching a number of items of content can consume significant memory resources;
time-ordered data - the temporal order in which data is received can be important;
access may not be carried through to completion - for example, only some portion of an item of content may be accessed (e.g., the first couple of minutes of a full-length movie);
bandwidth needed cannot be determined without some degree of understanding of the subject media - for example, one video file may be at a high spatial resolution, and another video file may not, and so while the files, both being video files, may appear to be the same, their respective bandwidth may be quite different ;
jitter in latency or bandwidth can be problematic - a consistent latency may be acceptable, but latency that varies considerably during a session can be problematic because of buffer overflow or underflow;
inadequate computation or bandwidth resources can make results useless due to time constraints:
   data is typically encoded (compressed), and so loss or lateness of some part of the data can have consequences on subsequent data decoding (decompression):
      lost data is not typically retransmitted due to time constraints; and
      a record of state should be maintained for all client devices - for streaming media, the streaming node needs to continue streaming data, and cannot wait to receive state information from clients.

The result of these differences is to greatly increase the need for management and monitoring of services performed on streaming media.

System 100 includes a plurality of service location managers exemplified by service location managers 120 and 122, a plurality of service portals exemplified by service portals 140 and 142, and a plurality of service providers exemplified by service providers 130, 132, 134 and 136. The service location managers 120 and 122, the portals 140 and 142, and the service providers 130, 132, 134 and 136 are logical entities that can be implemented on a single device or using multiple devices. Thus, system 100 can be representative of, for example, a single computer system that implements the functionality of service location managers 120 and 122, the portals 140 and 142, and the service providers 130, 132, 134 and 136. Alternatively, system 100 can encompass different nodes or devices in a computer system network. These nodes may be server computer systems, switches, routers or the like, having processing and memory capabilities sufficient to perform the various functionalities to be described herein. It is noted that the functionality provided by system 100 can be implemented using one or more devices. Furthermore, although system 100 is described with portals 140 and 142, there can be more than or less than two of these elements. In addition, there can be more or less service providers than the service providers 130, 132, 134 and 136. Moreover, there can be more service location managers than the service location managers 120 and 122.

System 100 can be implemented in an existing computer system network by overlaying the functionality of service location managers 120 and 122, service providers 130, 132, 134 and 136, and/or portals 140 and 142 onto,the existing network. That is to say, all or a part of the functionality provided by system 100 can be incorporated into existing network nodes. Alternatively, all or part of system 100 can be implemented by adding nodes into an existing network. For example, existing content sources and portals may be used, with nodes added for servicing , content and for managing service providers.

Within Figure 1, system 100 can communicate with a content source 110 and a client device 150. Although system 100 is described with a single content source 110 and client device 150, there can be more than one of each of these elements. Communication between system 100, content source 110 and client device 150, as well as communication within system 100, can include wired and/or wireless communication technologies.

Portals 140 and 142 can each be well-published portal sites that can each serve as the first point of contact between client device 150 and system 100. It is noted that portal 140 can perform an additional function of monitoring for billing purposes how long a client device (e.g., 150) has been coupled to system 100 and what content it has received. Content source 110 stores and provides access to one or more items of content.

Client device 150 can be virtually any kind of user device such as, but not limited to, a desktop or laptop computer system, a video-enabled handheld computer system (e.g., a portable digital assistant), a cell phone or any other type of computing device. Client device 150 can be used to request and subsequently receive an item of content. Alternatively, client device 150 can be used to provide one or more items of content to system 100. For example, client device 150 may deliver content to a service provider (e.g., 130) for a service to be performed (e.g., video background removal) on the content before it is subsequently stored by a content source (e.g., 110) or sent to another client device (not shown).

Within Figure 1, an item of content can refer to media or non-media data that can be live or recorded. For example, an item of content can include, but is not limited to, video-based data, audio-based data, image-based data, web page-based data, graphic data, text-based data or some combination thereof. For instance, an item of content can be a movie of digital video disk (DVD) quality.

A type of service may be performed on an item of content before the content is provided to client device 150. Alternatively, a type of service may be performed on an item of content after delivery of the content from client device 150 to a service provider (e.g., 130) has commenced. Types of services can include the processing of an item of content and/or the analysis of an item of content. For example, types of services can include video processing such as, but not limited to, transcoding, resizing of the video, jitter removal, dynamic cropping and resizing of the video stream based on spatial bounds determined from face detection, optical character reading from video, video background removal, and the like. Additionally, other types of services can include audio processing such as, but not limited to, audio background removal, audio silence detection, audio speed up or slow down, audio enhancement, noise reduction, speech recognition, speaker identification, speech/music discrimination, laughter detection, music analysis, and the like.

The analysis of an item of content can include, but is not limited to, speech recognition that produces a text transcript, or optical character recognition applied to one or more video images of a video stream to produce a text output. A video-based person tracking service that outputs a stream of records of person location and times is another example that can be used to illustrate analysis of an item of content. The locations might be expressed in terms of image coordinates, but may be more useful when expressed in terms of physical world coordinates (e.g., "x,y" coordinates referenced to the floor of a room). Another example that can be used to illustrate an analysis of an item of content pertains to a face detector service that outputs snapshots of faces extracted from a video stream, the times and image locations at which the snapshots were detected, identities for the faces, and/or the classification of the faces. Some portion of this information can be represented as text data.

As used herein, an item of content may have been serviced, may be in the process of being serviced, may not be serviced, or may not yet be serviced. In other words, an item of content, whether serviced or not, can still be referred to as an item of content. Servicing of an item of content can include the analysis or processing of an item of content. For clarity of discussion, the result of servicing an item of content may be referred to herein using terms such as "service result" or "service result content" or "service result data." Service result content may consist of, but is not limited to: a modified version of the original serviced item of content (e.g., when background removal is applied to a video stream); an item of content that is derived from the original item of content (e.g., when optical character recognition is used to produce text output); an item of content that is passed through a service provider and is not modified but merely forwarded (e.g., content that does not require transcoding when received by a transcoding service provider); or an item of content that has been previously sent to a service provider and is now cached (stored) on the service provider (e.g., content that was previously serviced and is now stored in memory at the service provider) so that it may be provided to requestors. Additionally, service result content may consist of any combination of the above examples.

Continuing with reference to Figure 1, services such as those described above can be performed by service providers 130, 132, 134 and 136. Service providers 130, 132, 134 and 136 each function to provide one or more types of services. That is, service providers 130, 132, 134 and 136 can each provide multiple and different types of services. For example, service provider 130 can be used for transcoding one item of content and for background removal of another item of content. Different types of services can be performed in parallel on different items of content. That is, service providers 130, 132, 134 and 136 can perform services on different but concurrent content streams. Service providers 130, 132, 134 and 136 can also provide caching services. For example, service provider 130, 132, 134 or 136 can cache an item of content, in whole or in part, before the item of content is serviced by service provider 130, 132, 134 or 136. Similarly, service provider 130, 132, 134 or 136 can cache the service result, in whole or in part, before the service result content is forwarded to the client device 150.

Service location managers 120 and 122 function to select a service provider (e.g., service provider 130, 132, 134 or 136) that can perform a requested type of service on an item of content to produce a service result that is provided to a client device 150. One or more service providers are known to each service location manager, and each service location manager selects among the service providers known to it in order to assign a service provider to perform a requested service. A service location manager may be understood to "supervise", or "to be a supervisor of", any service provider that is among the set of service providers from which it selects a service provider to perform a requested service. In various embodiments of the invention, the sets of service providers supervised by two different service location managers may be disjoint (e.g., containing no service providers in common), exactly the same, or partially overlapping (e.g., some service providers are in both sets, but some that are in one set are not in the other). For example, with reference to Figure 1, service providers 130, 132, 134 and 136, and any other available service providers, may all be supervised by both service location managers 120 and 122. Alternatively, service providers 130 and 132 may be supervised just by service location manager 120, while service providers 134 and 136 may be supervised just by service location manager 122. In another embodiment, service providers 130, 132 and 134 may be supervised just by service location manager 120 while service providers 134 and 136 may be supervised just by service location manager 122.

In some embodiments, each service location manager (e.g., 120 and 122 of Figure 1) maintains a record or listing of the service providers that it supervises. In some embodiments, for each service provider (e.g., 130, 132, 134 and 136 of Figure 1), the types of services that each service provider can perform, or can be made to perform, are also known to and recorded by each of the service location managers that supervise it. Further, in some embodiments, for each service provider, the available resources associated with each of the service providers are also known to and recorded by each of the service location managers that supervise it. The "available resources" of a service provider may refer to the computational, memory, network bandwidth, hardware, and other types of resources that are managed by the service provider and that may be disposed toward performing a requested service. In general, the available resources of a service provider may be less than its total resources. Within Figure 1, for example, if service location manager 120 supervises service providers 130 and 132, then the available resources associated with the service providers 130 and 132 are known to and recorded by service location manager 120. The resources associated with service providers 130, 132, 134 and 136 can include computational or hardware resources, such as but not limited to, the processor speed, total memory capacity, and special-purpose processors associated with each of the service providers. The resources associated with service providers 130, 132, 134 and 136 can also include network resources, such as but not limited to, the total bandwidth available at each of the service providers for receiving content and for sending content. In general, in one embodiment, service location manager 120 has knowledge of the available resources of the service providers (e.g., 130 and 132) it supervises while service location manager 122 has knowledge of the available resources of the service providers (e.g., 134 and 136) it supervises.

With reference to Figure 1, in some embodiments, the knowledge and records of the available service provider (e.g., 130, 132, 134, and 136) resources maintained by the service location managers (e.g., 120 and 122) may be based in part upon information obtained prior to the reception by the service location managers of any requests for services from client devices (e.g., 150). This information can be referred to as "static" resource information. In some embodiments, the knowledge and records of the available service provider resources maintained by the service location managers may be updated over time, after requests for services have been received and assigned by the service location managers, based on information received from the service providers. This information can be referred to herein as "dynamic" resource information. A service location manager can utilize both poll-based and push-based data gathering to update its records with dynamic resource information. Poll-based resource information gathering can involve the transmission of requests to service providers (e.g., 130 and 132), by a supervising service location manager (e.g., 120), as a means of eliciting information from the service providers regarding resource availability. Push-based information gathering can involve the periodic "push" or transmission of information regarding resource availability to a service location manager (e.g., 120) by the service providers (e.g., 130 and 132) it supervises. A combination of both poll-based and push-based information gathering can be employed according to one embodiment. In some embodiments, the knowledge and records of the available service provider resources maintained by the service location managers may be based in part upon both static and dynamic resource information.

In some embodiments, when a service location manager (e.g., 120 or 122) receives a request for an item of content that entails performing a service on the item of content, the service location manager (e.g., 120 or 122) may make a prediction or estimate of the resources needed to perform that service. When a service provider is selected to perform a newly requested service, the service location manager's record of the estimate of the service provider's available resources can be revised to reflect that these resources are at least partially allocated to performing the newly requested service. For example, if the requested service is expected to require N megabytes of memory in service provider 130, then the service location manager's record of the available memory resources of service provider 130 is updated to indicate that N megabytes of memory have been allocated. Alternatively, the amount of available memory resources recorded by the service location manager (e.g., 120 or 122) for service provider 130 can be reduced by N megabytes. As will be seen, the record of available resources associated with a service provider can be similarly adjusted (e.g., increased) when, for example, a service is completed by a service provider.

As mentioned previously, multiple client devices may each participate in a session that may involve requesting a service to be performed on an item of content. For each session handled by the service location manager (e.g., 120 or 122) in which an item of content is to be serviced, the service location manager (e.g., 120 or 122) will select a service provider to perform the service. The various embodiments of the methodology described above are applied to each session in progress, so that the service location manager (e.g., 120 or 122) has an updated record of the resources allocated by and/or the resources available on each service provider supervised by the service location manager (e.g., 120 or 122).

In essence, according to one embodiment, the service location manager (e.g., 120 or 122) has a budget of resources available to perform services. More specifically, the service location manager (e.g., 120 or 122) has a budget of the resources available at each service provider that it supervises. For each session requesting that a service be performed, an estimate of the resources involved for that service can be made by the service location manager (e.g., 120 or 122). For each session dispatched to a service provider, the budget of available resources for that service provider can be reduced by the estimate. As sessions are terminated, or as services are completed, the budget of available resources of the service location manager (e.g., 120 or 122) can be increased to reflect that resources have become available again. Updates of the budget of available resources may be obtained dynamically, through poll-based or push-based data gathering between the service location manager and the service providers it supervises, while one or more services are in progress on the service providers. The estimate of the size and distribution of the resource budget is thereby always relatively current, and can be used as a basis by the service location manager (e.g., 120 or 122) for selecting a service provider for each new session.

Note that, in alternative embodiments, a service provider can be selected by the service location manager (e.g., 120 or 122) to perform a service based on the resources available on each service provider or based on the resources already allocated, without regard to the estimate of resources needed to perform that service, or a service provider can be selected by the service location manager (e.g., 120 or 122) to perform a service based on the estimate of resources needed to perform that service, without regard to the resources available or previously allocated for each service provider.

Two network-connected computing devices can be deemed "close" in a network sense if the latency and/or number of network "hops" between them is low, and/or if the bandwidth between them is high. Within Figure 1, one embodiment in accordance with the invention can include the functionality that any single service location manager (e.g., 120 or 122) would manage a "region" of service providers that are "close" to it in a network sense. The portal (e.g., 140 or 142) that the client device (e.g., 150) contacts may then pass the service request to a selected service location manager that is close to the requesting client, the content source, or both. For example, the service location manager may be selected based on the content source address or based on the measured closeness of it to the content source network address or the client network address or both. The service location manager regions may overlap. For example, each service location manager can supervise one or more of the same "border" service providers that are approximately as close to it as they are to one or more other service location managers. In these cases, each service location manager can forward records of its service assignments to "neighbor" service location managers that supervise at least one service provider in common, so that these separate service location managers do not independently assign too many services to "border" service providers.

Additionally, if a service location manager forwards all records of service assignments to a least one other service location manager, the service management functionality can be made fault tolerant. For example, if a portal (e.g., 140 or 142) cannot contact a given service location manager (e.g., 120), it can forward a request to a neighbor service location manager (e.g., 122) along with the information that the first service location manager is unavailable. This prompts the available neighbor service location manager to take over the management of the "border" service providers and some or all of the service providers that are in the failed service location manager's region.

In some embodiments, service location managers use information about one or more neighbor service location managers to achieve a greater balance in the distribution of the workload among the service location managers. For example, a service location manager with heavily overloaded service providers, or that is receiving service requests from portals at a very high rate, may begin to "off-load" some of the service requests it receives to neighboring service location managers. More specifically, if the rate at which a given service location manager receives service requests from portals exceeds some threshold, or if a queue of such requests pending for action by the service location exceeds a threshold length, or if the records of available resources on service providers managed by the service location manager indicate that the total available resources in some category falls below a threshold, that service location manager may select a second service location manager to which to forward future and/or pending service requests until the triggering condition is no longer met.

In some embodiments, service location managers may adapt the sets of service providers they supervise. This process of adaptation may consist of adding new service providers to the set supervised by a given service location manager, removing service providers from this set, or both. In some cases, this adaptation may result in an increase in the number of service providers supervised by a given service location manager, while in other cases it may result in a decrease or no change in this number.

In some embodiments, adaptation of the supervised set of service providers for a service location manager (e.g., 120) is triggered when the computational load of the service location manager exceeds a threshold. In response, the service location manager notifies a second service location manager (e.g., 122) that it should take over supervision of some subset of the service providers currently supervised by service location manager 120. In one embodiment, transfer of supervision is facilitated by the sending, from service location manager 120 to service location manager 122, of records regarding the available resources, service assignment status, and other information for the service providers whose supervision is to be transferred. In other embodiments, this transfer of service provider records between service location managers is omitted. In yet other embodiments, service location manager 120 notifies service providers it will cease to supervise and that they should begin sending resource status information to the new supervising service location manager 122. In other embodiments, service location manager 122 initiates push-based or poll-based information gathering for each of the newly supervised service providers on the list sent to it from service location manager 120.

In some embodiments, adaptation of the supervised set of service providers for a service location manager (e.g., 120) is triggered when the total availability of resources, within some category, over all supervised service providers falls below a threshold value. In response, the service location manager requests a second service location manager (e.g., 122) for permission to take over supervision of some subset of the service providers currently supervised by service location manager 120. If permission is denied, or if the number or available resources of service providers offered by service location manager 122 is insufficient, service location manager 120 may make a similar request of a third service location manager (not shown), a fourth (not shown), and so on, until permission to supervise a sufficient number of new service providers and/or service provider resources is granted. The "sufficient" number of new service providers, and/or the sufficient number of new service provider resources, required by service location manager 120 is determined, in one embodiment, based at least in part upon the current rate of service requests received by service location manager 120, the current queue of pending service requests for attention by service location manager 120, or both. In various embodiments, transfer of supervision of service providers between service location managers 120 and 122 may be accomplished by any of the means discussed above for the case in which service location manager 120 wishes to decrease the number of service providers it supervises.

In one embodiment in accordance with the invention, the processing load of each service location manager is monitored. Monitoring can be accomplished through, but is not limited to, occasional or periodic reporting of each service location manager's processor load, pending service request queue length, and/or other information relating to processing load, to another monitoring entity. The reporting may be either poll-based (at the request of the monitoring entity) or push-based (sent by the service location manager at times of its choosing). In some embodiments, the monitoring entity may comprise one or more of the portals (e.g., 140 and 142). In other embodiments, it may comprise one or more of the service location managers (e.g., 120 and 122). In yet other embodiments, it may comprise one or more dedicated computing devices attached to the network and able to communicate with at least some of the service location managers. In some embodiments, no single entity monitors all of the service location managers. For instance, in one embodiment, a given portal (e.g., 140) just monitors the service location managers (e.g., 120 and 122) to which it sends service requests. In other embodiments, monitoring is facilitated through arrangement of communication between the service location managers in a tree-like communication hierarchy, such that processing load status messages are sent between service location managers that are directly linked in the tree, with the messages being sent from the child service location manager to the parent service location manager in the hierarchy. In this way, the service location manager at the top of the tree gathers the status of all service location managers in the network. This service location manager may then inform other service location managers, portals, or other networked computing devices of the overall service location manager processing load status.

System 100 of Figure 1 in operation is now more fully described. At the beginning of a session, client device 150 sends message 1 to a portal (e.g., 140). It is noted that message 1 identifies a particular item of content (e.g., the name of a movie).

Also, in one embodiment, message 1 includes information sufficient for identifying a type of service that should be performed on the item of content before the service result is delivered to client device 150 and/or to other destination devices. That information can take many forms. In one form, message 1 specifically identifies a type of service (e.g., background removal or speech recognition). In another form, message 1 identifies attributes of client device 150 and/or other destination devices, such as their memory capacity, screen size, processing capability and the like. Based on these attributes, system 100 (e.g., portal 140) can derive a type of service that should be performed (e.g., transcoding). In yet another form, message 1 identifies the type(s) of client device 150 and/or other destination devices, and based on stored knowledge of those types of devices, system 100 (e.g., portal 140) can derive a type of service that should be performed (e.g., transcoding).

Within Figure 1, message 1 can include other information. If the source of the item of content is known by client device 150, then the content source (e.g., 110) can also be identified in message 1. For example, message 1 can include the Uniform Resource Locator (URL) for content source 110. If the source of the item of content is not known to client device 150, the content source can be located by system 100 (e.g., by portal 140) if that information is not already known to system 100. In some cases, the client device 150 may be the source of the content.

After receiving message 1, portal 140 selects a service location manager (e.g., 120 or 122) to which to send message 2. It is noted that portal 140 can perform this selection in a wide variety of ways. For example, in one embodiment, portal 140 can maintain a record that includes a single service location manager (e.g., 120) with which to communicate among all possible service location managers of system 100. In this case, portal 140 selects the single service location manager according to its record. Alternatively, in another embodiment, portal 140 can maintain a record including a prioritized list of a subset of service location managers among the plurality of service location managers of system 100. It should be noted that this subset may include all of the plurality of service location managers of system 100, or it may not include some of the service location managers of system 100. From this record of prioritized service location manager list, portal 140 may select the highest priority service location manager (e.g., 120) to handle a new service request from a client device 150. However, if the highest priority service location manager is subsequently determined to be non-responsive to communication from portal 140, then portal 140 can try to communicate with the next highest priority service location manager (e.g., 122) of the record and so forth.

In other embodiments, portal 140 can maintain a record including a list of a subset of service location managers that are available to it among the plurality of service location managers of system 100. It should be noted that this subset may include all of the plurality of service location managers of system 100, or it may not include some of the service location managers of system 100. In one embodiment, portal 140 may select a service location manager randomly from the recorded list. Alternatively, in another embodiment, portal 140 may select a service location manager (e.g., 120) in a round robin manner from the recorded list. For a list of N service location managers, "round robin" selection can be carried out by selecting the first service location manager on the list to handle the first service request, then selecting the second service location manager on the list to handle the second service request, and so on, until the Nth request is received by the portal and passed to the Nth service location manager on the list. The next (N+1th) request can then be passed to the first service location manager on the list, and subsequent requests are passed to successive list service location managers in the order they appear on the list, until the last list entry is again reached and the process again "wraps around" to the first list entry.

In yet another embodiment, portal 140 of Figure 1 may maintain a record, for each of the service location managers that are available to it from the plurality of service location managers of system 100, that can include the service location manager's available computational power, number of pending service requests, and/or expected latency in assigning a new service request after it is received. This record may be updated over time based on poll-based or push-based gathering of service location manager status, as discussed above. When a new service request is received from client device 150, portal 140 may then pass this request to the service location manager (e.g., 120) from the record that currently has the maximum available computational power, or that may currently be expected to handle the service request fastest once it is received. In this manner, portal 140 is selecting the service location manager that is the least busy.

In another embodiment, each service location manager may maintain a record of their total available computational power of the service providers it supervises, and may propagate this record (e.g., via either push-based or poll-based methods) to one or more portals (e.g., 140). When a new service request is received, portal 140 may then select to pass the request to the service location manager whose supervised set of service providers currently has the most total available computational power. In another embodiment, portal 140 of Figure 1 may maintain a record including the available network bandwidth of each of the service location managers that are available to it from the plurality of service location managers of system 100. This record may be updated over time based on poll-based or push-based gathering of service location manager status, as discussed above. When a new service request is received from client device 150, portal 140 may select the service location manager (e.g., 120) that currently has the highest bandwidth, according to its record, to handle the service request.

Alternatively, in another embodiment, portal 140 may maintain a record including "network" distances between the service providers it supervises and other computing devices on the network, wherein these distances are a function of network latency and/or number of network "hops" between computing devices on the network. This record of distances may be updated over time based on poll-based or push-based gathering of network status information, and new record elements may be added when service requests are received that involve clients devices or content sources that were previously unknown to the service location manager. When a new service request is received from client device 150, portal 140 can select, according to its record, the service location manager (e.g., 120) that is "nearest" to itself, to client device 150, and/or to the content source required by the service, to handle the service request. However, if the nearest service location manager is subsequently determined to be non-responsive to communication from portal 140, then portal 140 can try to communicate with the next nearest service location manager (e.g., 122) of the record and so forth.

Finally, in yet another embodiment, portal 140 may maintain a record including, for each of the service location managers available to it among the plurality of service location managers of system 100, more than one of the types of information discussed above (e.g., service location manager computational power, pending service request queue length, expected latency in assigning a received request, total supervised service provider available computational power, network distance, and/or network bandwidth). When a new service request is received from client device 150, portal 140 may compute for each available service location manager a function of a combination of the types of information discussed above, according to its record. Portal 140 may then select the service location manager (e.g., 120) that is rated "best" according to the function (e.g., that with highest or lowest function value, depending on the function) to handle the service request.

Once portal 140 has selected a service location manager (e.g., 120), portal 140 sends message 2 to service location manager 120. In one embodiment, message 2 includes information sufficient for identifying a type of service that should be performed on the item of content before the service result is delivered to client device 150 and/or other destination devices. As just described, that information can take many forms. In one form, message 2 specifically identifies a type of service (e.g., background removal or speech recognition). In another form, message 2 identifies attributes of client device 150 and/or other destination devices, such as their memory capacity, screen size, processing capability and the like. Based on these attributes, system 100 (e.g., service location manager 120) can derive or determine a type of service that should be performed (e.g., transcoding). In yet another form, message 2 identifies the type(s) of client device 150 and/or other destination devices, and based on stored knowledge of those types of devices, system 100 (e.g., service location manager 120) can derive or determine a type of service that should be performed (e.g., transcoding). Based on the information provided by message 2, service location manager 120 identifies the type of service to be performed.

It is understood that message 2 can include other information. For example, message 2 can also identify the item of content and/or the content source.

In one embodiment, service location manager 120 (and 122) can maintain a record that includes a list of the service providers (e.g., 130 and 132) and the services they are capable of providing. In one such embodiment, the record maintained by service location manager 120 (and 122) also includes the total resource capacities associated with the service providers (e.g., 130 and 132) it supervises. The record maintained by service location manager 120 (and 122) can also include the resources that are available at each of the supervised service providers (e.g., 130, 132 and 134) for performing requested services. The record maintained by service location manager 120 (and 122) can also include the resources of each of the service providers (e.g., 130 and 132) that have been previously allocated to other service sessions by those service location managers.

Within the present example, service location manager 120 selects from among the service providers (e.g., 130 and 132) that it supervises which one is to perform the service identified from message 2. In one embodiment, service location manager 120 selects a service provider based on the information provided in the record described above. For example, service location manager 120 can select a service provider based on which service provider has the least amount of resources being utilized or the greatest amount of resources available for performing newly assigned services.

In another embodiment, service location manager 120 estimates the amount of resources associated with performing the service identified in message 2, and uses the estimate to select a service provider (e.g., 130, 132, 134 or 136) to perform the service. Alternatively, service location manager 120 can select a service provider it supervises to perform a service based on both the amount of resources available for performing services on the various service providers (or the amount of resources previously allocated) and the amount of resources estimated to be consumed by performing the service.

In yet another embodiment, service location manager 120 can select a service provider it supervises to perform a service based on information received from the service provider itself or from another service location manager (e.g., 122) that also supervises the same service provider. This information can include an indication that a particular service was started or is currently being performed by the service provider. It is appreciated that the information about the particular service can also include the amount of resources estimated to be consumed by performing the service.

It is noted that service location manager 120 and service location manager 122 can send their records to each other in a periodic or non-periodic manner shown by double arrow 75. In this fashion, if a service location manager (e.g., 120) subsequently becomes inoperable, a remaining service location manager (e.g., 122) has the information needed to assume the operational responsibility of the inoperable service location manager (e.g., 120) in a seamless manner. In this manner, fault tolerance is provided for the service location managers 120 and 122, as described in more detail below.

In the example of Figure 1, service location manager 120 selects service provider 130. The aforementioned service provider record is updated by service location manager 120 to reflect the selection of service provider 130. In one embodiment, the amounts of the various resources associated with service provider 130 are reduced by the estimated amount of resources expected to be used to perform the service (or the amount of resources allocated is increased).

Also, service location manager 120 sends message 3 to portal 140. Message 3 includes information sufficient for locating and contacting service provider 130. For example, message 3 can include a URL specifying service provider 130. It is noted that message 3 can include other information. For example, message 3 can also identify the item of content and/or the content source:

After receiving message 3, portal 140 sends message 4 to client device 150. Message 4 includes the information for locating and contacting the service provider 130 that was specified by message 3. It is noted that message 4 can be identical to message 3 (e.g., message 4 may be a forwarding of message 3). However, message 4 can include other (additional) information added by portal 140. For example, message 4 can also identify the item of content and/or the content source (e.g., 110) if that information is determined by portal 140 instead of service location manager 120.

In an alternate embodiment, in lieu of messages 3 and 4, service location manager 120 can send a message directly to client device 150. The message from service location manager 120 to client device 150 can include the information for locating and contacting service provider 130. The message can also include other information such as the identity of the item of content and/or the content source (e.g., 110).

In any case, client device 150 receives a message that includes information sufficient for locating and contacting service provider 130. Based on that information, communication is established between client device 150 and the service provider 130. In other words, the session initiated by client device 150 is transferred from portal 140 to service provider 130. Within one embodiment, it is noted that the transfer from portal 140 to service provider 130 is seamless and transparent to an end user at client device 150.

In one embodiment, the message received by client device 150 (e.g., message 4) uses or is based on Synchronized Multimedia Integration Language (SMIL). Redirection of client device 150 from portal 140 to service provider 130 can be accomplished using dynamic SMIL rewriting. The dynamic SMIL rewriting process can be comprised of substituting, for one or more placeholders in a template SMIL file, a URL specifying service provider 130. Rewriting of the SMIL file may be accomplished by service location manager 120 in this example. This SMIL file is then sent to the client device 150 that requested the service, either directly from service location manager 120 or via messages 3 and 4 as described above.

Continuing with the example in view of Figure 1, after receiving message 4 from portal 140 (or an equivalent message from service location manager 120), client device 150 sends message 5 to service provider 130. Message 5 identifies the item of content and the type of service to be performed by service provider 130. Message 5 can include other information. For example, if the content source is known at this point to client device 150, that information can be included in message 5.

Upon receiving message 5, service provider 130 sends message 6 to content source 110. As mentioned above, content source 110 can be identified to service provider 130 in message 5. Otherwise, service provider 130 can locate content source 110. In message 6, service provider 130 requests that the item of content be provided to it.

In response to message 6, content source 110 sends the item of content to service provider 130 for servicing (illustrated by arrow 7 in Figure 1). In one embodiment, the item of content is streamed to service provider 130.

In one embodiment, service provider 130 can always be set-up and ready to execute the specified service. That is, the specified service can be continuously executing on service provider 130, waiting for data to operate on. In another embodiment, the specified service can be quiescent until either message 5 or the item of content is received, or begins to be received, by service provider 130. That is, service provider 130 may need to set up or start up the specified service, and will not do so until the potential need for the service is identified or until content on which to perform the service has begun to arrive at service provider 130.

In any case, service provider 130 can then perform the specified service on the item of content. The item of content can be cached by service provider 130 in whole or in part before servicing, or the item of content can be serviced as it is received by service provider 130.

The service result content is then sent by service provider 130 to client device 150 (illustrated by arrow 8 in Figure 1). In one embodiment, the service result content is streamed to client device 150. The service result content can be cached by service provider 130 in whole or in part after servicing (before streaming), or the service result content can be streamed as it is serviced by service provider 130.

Within Figure 1, once the service result content has been delivered by the selected service provider (e.g., service provider 130) and received by client device 150, the ongoing session can be terminated. Accordingly, the service provider record maintained by service location manager 120 can be updated to reflect that the service provider 130 has completed its servicing tasks or that the session has been terminated. This record can also be updated to show that resources allocated to performing the service are available again. For example, the amount of resources available for performing services recorded for service provider 130 can be increased.

When a service provider (e.g., 130) is supervised by more than one service location manager (e.g., 120 and 122), it is desirable to propagate information regarding changes in status of the service provider to all supervising service location managers. Hence, in the above example, when service location manager 120 updates its record of service provider 130 to reflect that it has completed a particular service task assigned to it by service location manager 120, or that a particular session assigned to it by service location manager 120 has been terminated, it is desirable to propagate this information to service location manager 122. To accomplish this, a copy of the updated record of service location manager 120 regarding service provider 130 can be sent to service location manager 122, thereby informing service location manager 122 of the change in status of service provider 130. In this manner, the service location manager 122 is able to update its record if it also supervises service provider 130. Moreover, the transmission of this updated record from service location manager 120 to service location manager 122 can enable fault tolerance functionality, in that service location manager 122 is more fully prepared to assume the operations of service location manager 120 if the latter becomes non-responsive. Alternatively, in some embodiments, each service provider (e.g., 130) maintains a list of the service location managers (e.g., 120 and 122) that supervise it. In these embodiments, when service provider 130 completes a service task or when a session assigned to it is terminated, it may notify all service location managers (e.g., 120 and 122) that supervise it that it now has more resources available for performing services.

Different approaches can be used to prompt an update of the record of a service provider's status that is maintained by a given service location manager. In one approach with reference to the provided example, at or around the time that the service location manager 120 is making a selection of a service provider, the service location manager 120 can estimate the amount of time needed to complete the service to be performed on the item of content. The record can be updated to reflect that the service has been completed when that amount of time has passed. If service location manager 120 maintains a record of other service location managers supervising service provider 130, and if service location manager 122 is on that list, service location manager 120 may send an update of the record regarding service provider 130 to service location manager 122 when the estimated amount of time to complete the service has passed. Alternatively, for embodiments in which each service provider maintains a list of all service locations managers that supervise it, the service provider (e.g., 130) can indicate to all supervising service location managers (e.g., 120 and 122) when it has completed a service, and their respective records regarding service provider 130 can be updated accordingly. These approaches can be extended to account for the delivery of the service result content to client device 150. For example, the amount of time estimated by the service location manager 120 for service provider 130 to perform the service can be increased to account for any additional time needed by service provider 130 to send the service result content to client device 150. Similarly, service location manager 120 can estimate the length of time that the session is expected to last (e.g., if the item of content is a movie that lasts two hours, the session may be estimated as lasting about two hours). Alternatively, service provider 130 can indicate to supervising service location managers 120 and 122 when it has completed sending the service result content to client device 150. In another embodiment, service provider 130 can indicate to all supervising service location managers 120 and 122 when the sending of the service result content to client device 150 has been terminated by client device 150.

In the discussion above, the item of content is sent to service provider 130 in response to message 6. As mentioned previously herein, service provider 130 can instead store or cache content previously received and/or serviced, obviating the use of message 6 and the response to message 6 (e.g., obviating the data flow indicated by arrow 7 in Figure 1).

Within Figure 1, in one embodiment, the addition of message A from service location manager 120 to the selected service provider (e.g., 130) is shown. With reference to the present example, message A can be sent from service location manager 120 to service provider 130 at any time after message 2 and before message 5. Message A can be used for any number of different purposes. For example, in a situation in which the type of service to be performed on the specified item of content is not continuously executing on service provider 130, message A can be used to alert service provider 130 to the approaching need for the service. Consequently, the set-up and/or initiation of the service can begin and perhaps be completed before message 5 is received from client device 150, reducing overall latency.

Also, message A can be used to provide to service provider 130 the identity of the item of content and perhaps the identity of the content source 110. With this information, service provider 130 can request content source 110 to provide (e.g., begin streaming) the item of content before message 5 is received, further contributing to a reduction in latency. In addition, the use of message A in this manner can result in improved security, because the content source 110 does not have to be identified to the client device 150, for example.

Furthermore, message A can be used in lieu of messages 3, 4 and 5. For instance, in addition to identifying the item of content and perhaps the content source, message A can also include information enabling service provider 130 to establish communication with client device 150. In other words, instead of having client device 150 initiate the transfer of communication from portal 140 to service provider 130, the transfer of communication can be initiated by service provider 130 in a manner that can still be seamless and transparent to a user of client device 150.

Within Figure 1, system 100 can be implemented such that if service providers (e.g., 134 and 136) are too busy while their supervising service location manager (e.g., 122) is still able to process new service requests from a portal (e.g., 140), one or more service providers (e.g., 130) may be gained from a neighboring region supervised by another service location manager (e.g., 120). This "transfer" of one or more service providers can be facilitated if the neighboring service location managers (e.g., 120 and 122) share their updated records as shown by arrow 75.

In one embodiment, if a service provider (e.g., 134) is being supervised by two or more service location managers (e.g., 120 and 122) and it receives a new service assignment from one of them, the service provider may notify its other supervising service location manager(s) of the new service assignment. There are different ways for service providers to notify the service location managers that supervise it. For example, the service provider may immediately notify the other supervising service location manager(s) of the new service assignment. Alternatively, the service provider may include the new service assignment in its next periodic batch status notification to all of its supervising service location managers. In another embodiment, each service location manager (e.g., 122) may poll or query all of the service providers (e.g., 134 and 136) that it supervises on some periodic basis to find out their current processing loads and other status. In the response, the service provider may include the new service assignment. It is noted that with any of these notifications, a determination may be made as to whether the length of time to complete the service is less than a threshold value. If this length is less than the threshold value, the service provider may not report the assigned service since it involves so little time to complete.

Within Figure 1, it is noted that the new service assignment notification from a service provider (e.g., 134) to a service location manager (e.g., 120) may include an estimation of the amount of time to complete the new service assignment. However, that estimation can subsequently be expired by the service location manager once it receives a batch update from the same service provider of its current load status. Alternatively, a new service assignment notification may be issued by the service provider with a fixed expiration time. For example, a new service assignment notification may be given by the service provider along with a fixed expiration time of how long the service location manager should assume that the service provider is busy performing this service.

In one embodiment, each service location manager knows for each of its service providers the list of other service location managers that share supervision of that service provider. In this embodiment, a service location manager that dispatches a new service to a service provider may also notify the other service location managers that supervise that same service provider of this new assignment so that they can update their service provider status records accordingly.

Within system 100 of Figure 1, for a service provider (e.g., 130) that is supervised by multiple service location managers (e.g., 120 and 122), it is noted that status updates of the resource availability of service provider 130 may be provided to all supervising service location managers 120 and 122 in different ways. For example, service provider 130 may send a status update to one service location manager (e.g., 120), and if that service location manager 120 maintains a list of all other service location managers (e.g., 122) that supervise service provider 130, it may then provide the status update to these other supervising service location managers. Alternatively, in embodiments in which each service provider maintains a list of the service location managers that supervise it, service provider 130 may send status updates directly to all supervising service location managers 120 and 122.

Within system 100, it is noted that selection of service providers (e.g., 130, 132, 134 and 136) to be shared among multiple service location managers can be accomplished in a wide variety of ways. For example, the shared service providers can be selected at random, so that "regions" of service providers supervised by different of service location managers are well intermeshed. In another embodiment, the service providers may be divided into separate (non-overlapping) sets, with each set being supervised by each of N different service location managers, and with no service location manager that supervises service providers of one set also supervising service providers of another set. Alternatively, selection of shared service providers can be determined by probability distributions. For instance, given estimates of the distances between each of a set of service location managers and each of a set of service providers, wherein these distance estimates may be based on geographic factors, network factors, or both, the probability that a particular service provider is supervised by a given service location manager may increase with the nearness between them. Such a probability distribution is well represented by a Gaussian function of distance from the service location manager. Each service location manager can have this type of probability distribution of service providers being selected to be supervised by it. Hence, service providers that are near more than one service location manager could be assigned to be supervised by more than one service location manager.

In one embodiment of system 100, a "master" service location manager manages all of the other service location managers of system 100, by maintaining records of the processor loads of these service location managers and their network distances to other computing devices on the network. As described above, gathering of this information may be done in a hierarchical manner. In other embodiments, each service location manager communicates with the master directly. Information collected by the master service location manager may be distributed to portals (e.g., 140 and 142) for use in their processes of selecting service location managers with which to communicate. Alternatively, all portals may send their requests to the master service location manager, which forwards the requests down a hierarchy toward service location managers with the most processing capacity, or which are best positioned according to the network distance records of the service location managers to client devices and content sources involved in the service request, to handle assignment of the request.

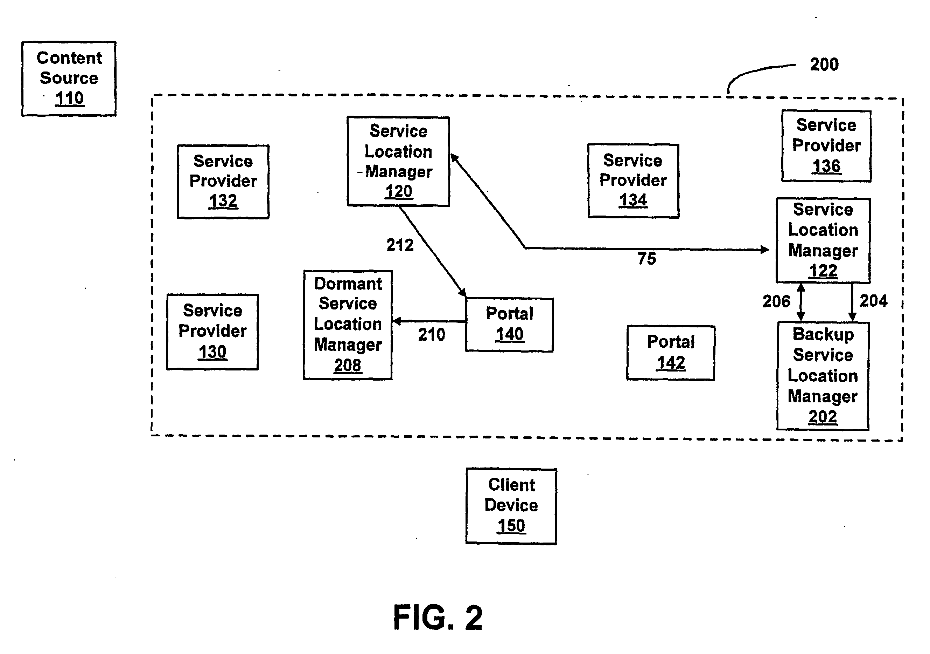

Figure 2 is a block diagram of a system 200 for servicing content from a content source 110 and for delivering the service result content to a client device 150 in accordance with an embodiment of the present invention. Specifically, system 200 includes functions and components for implementing fault tolerance for service location managers 120 and 122. It is noted that the components of Figure 2 having the same reference numbers as Figure 1 can operate in a similar manner. However, there are some differences.

For example, as shown within system 200, fault tolerance for the service location manager 122 can be provided through a backup service location manager 202. As such, whenever the service location manager 122 updates its record(s) as described herein, service location manager 122 may send the updated records to the backup service location manager 202 as shown by arrow 204. Part of the functionality of backup service location manager 202 may be to occasionally or periodically check on the operating status of service location manager 122 as shown by double arrow 206. If backup service location manager 202 determines that service location manager 122 is non-responsive or inoperable, backup service location manager 202 is able to take over the operations of service location manager 122 since it has the updated record(s) from service location manager 122 along with the knowledge (e.g., pre-stored) of which service providers (e.g., 134 and 136) service location manager 122 supervised. Additionally, when backup service location manager 202 has knowledge (e.g., pre-stored, or obtained from notifications received from other service location managers or portals) of the list of portals (e.g., 142) that may attempt to communicate with service location manager 122, backup service location manager 202 may notify these portals that they should begin communicating with backup service location manager 202 instead of with service location manager 122. Furthermore, upon assuming the operations of service location manager 122, backup service location manager 202 may recruit its own backup service location manager (not shown) and start providing its updated record(s) to it. In this manner, backup service location manager 202 can provide fault tolerance for service location manager 122. In some embodiments, backup service location manager 202 may not only be a backup, but instead may actively service requests from portals before taking over the operations of service location manager 122 when it is found to be non-responsive. It is noted that all other service location managers (e.g., 120) of system 200 could be implemented with a backup service location manager similar to backup service location manager 202.

It is noted that other service location managers similar to backup service location manager 202 can be "chained" together in order to provide further redundant fault tolerance. For example, the other service location managers could be chained together such that the active service location manager 122 would just update the next other service location manager (e.g., 202) in line and it would update the next one and so on. Alternatively, the other service location managers could be chained together and operate so that the active service location manager 122 could update two or more other service location managers and those service location managers could update two or more other service location managers and so forth. In another embodiment, the active service location manager 122 would just update a first backup service location manager 202. Then if the active service location manager 122 became inoperable, the first backup service location manager 202 would become the active service location manager and it would begin updating the following, second backup service location manager in the chain. For all of the above examples, it is noted that the other service location managers may be active and able to handle service requests from portals at all times that system 200 is operational, instead of merely serving as backups.

Within Figure 2, another fault tolerance included within system 200 is dormant or inactive service location manager 208. Specifically, a portal (e.g., 140 or 142) that interacts with service location manager 120 can determine whether it is inoperable or non-responsive. If so, the portal (e.g., 140) is able to contact dormant service location manager 208 shown by arrow 210 in order to trigger it to start operating as the service location manager for the region previously supervised by service location manager 120. It is noted that the service location manager functionality would already be a part of dormant service location manager 208, but this functionality has been inactive, or dormant service location manager 208 has been operating in another function. Additionally, the dormant service location manager 208 would have knowledge of the service providers (e.g., 130 and 132) that it is to supervise in order to assume the operations of service location manager 120. In one embodiment, before service location manager 120 becomes inoperable, service location manager 120 can be implemented such that it sends its updated record(s) to one or more portals (e.g., 140) shown by arrow 212. Therefore, once portal 140 determines that service location manager 120 is inoperable, portal 140 is also able to provide dormant service location manager 208 the updated record(s) of service location manager 120 shown by arrow 210. It is appreciated that this functionality can be incorporated with one or more embodiments of the present invention described herein.

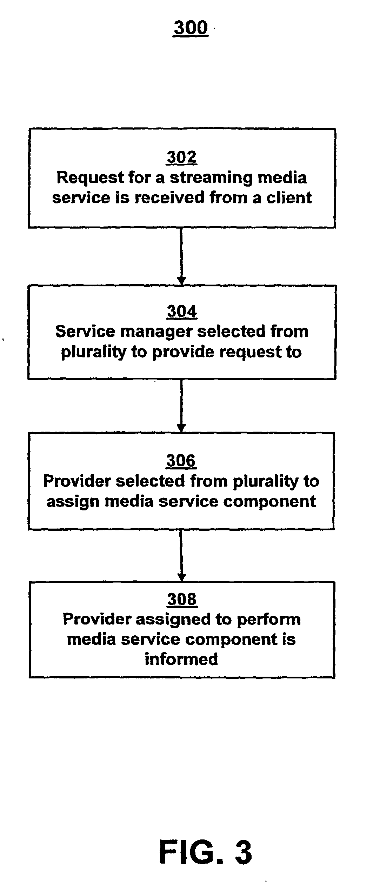

Figure 3 is a flowchart 300 of operations performed in accordance with an embodiment of the present invention for managing a streaming media service. Flowchart 300 includes exemplary processes of embodiments of the present invention that can be carried out by a processor(s) and electrical components under the control of computer readable and computer executable instructions. The computer readable and computer executable instructions may reside, for example, in data storage features such as computer usable volatile memory, computer usable non-volatile memory and/or computer usable mass data storage. However, the computer readable and executable instructions may reside in any type of computer readable medium. Although specific operations are disclosed in flowchart 300, such operations are exemplary. That is, the present embodiment is well suited to performing various other operations or variations of the operations recited in Figure 3. It is noted that the operations of flowchart 300 can be performed by software, by firmware, by hardware or by any combination thereof.

At operation 302, a request for a streaming media service is received from a client wherein the streaming media service includes a media service component. It is noted that operation 302 may be implemented in any manner similar to that described herein, but is not limited to such.

At operation 304 of Figure 3, a service location manager to which to provide the request is selected from a plurality of service location managers. It is appreciated that operation 304 may be implemented in any manner similar to that described herein, but is not limited to such.

At operation 306, a service provider to which to assign the media service component is selected from a plurality of service providers of a network. It is understood that operation 306 may be implemented in any manner similar to that described herein, but is not limited to such.

At operation 308 of Figure 3, the service provider selected to perform the media service component is informed of its assignment, therein enabling the requested streaming media service to be performed on streaming media. It is noted that operation 308 may be implemented in any manner similar to that described herein, but is not limited to such.

The foregoing descriptions of specific embodiments of the present invention have been presented for purposes of illustration and description. They are not intended to be exhaustive or to limit the invention to the precise forms disclosed, and' it is evident many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents.

## Claims

1. A method (300) for managing a streaming media service, said method comprising:
changing, at one or more of a plurality of service location managers (120, 122), a set of service providers (130, 132, 134, 136) supervised by the respective one or more service location managers when a computational load of the respective one or more service location manager exceeds a threshold or when total availability of resources, within some category, over all service providers falls below a second threshold;
receiving a request (302) for a streaming media service from a client (150), said streaming media service comprising a media service component;
selecting (304) a service location manager (120) to which to provide said request from the plurality of service location managers (120 and 122);
selecting (306) by the selected service location manager (120) a service provider from the set of service providers (130, 132, 134, 136) supervised by the selected service location manager (120) to which to assign said media service component; and
informing (308) said service provider (130) of said assignment to perform said media service component, causing said service provider to prepare to perform said streaming media service on streaming media.

2. The method as claimed in Claim1, wherein said selecting (304) said service location manager comprises: maintaining a record comprising identifying information of a service location manager among said plurality of service location managers; and selecting said service location manager according to said record.

3. The method as claimed in Claim 1, wherein said selecting (304) said service location manager comprises: maintaining a record comprising a prioritized list of a set of available service location managers among said plurality of service location managers ; and selecting said service location manager according to the order of priority of said list of said record.

4. The method as claimed in Claim 1, wherein said selecting (304) said service location manager comprises: maintaining a record comprising identifying information for a set of available service location managers among said plurality of service location managers; and selecting said service location manager randomly from said record.

5. The method as claimed in Claim 1, wherein said selecting (304) said service location manager comprises: maintaining a record comprising identifying information for a set of available service location managers among said plurality of service location managers; and selecting said service location manager in a round robin manner from said record.

6. The method as claimed in Claim 1, wherein said selecting (304) said service location manager comprises: maintaining a record comprising the processing load of each of a set of available service location managers among said plurality of service location managers; and selecting said service location manager from said record having minimum processing load.

7. The method as claimed in Claim 1, wherein said selecting (304) is performed by a portal (140).

8. The method as claimed in Claim 1, wherein said selecting (304) said service location manager is based on the service location manager having the shortest pending request queue, lowest expected latency in servicing said request, or largest currently available communication bandwidth.

9. The method as claimed in Claim 1, wherein said selecting (304) said service location manager is based on a network condition.

10. The method as claimed in Claim 9, wherein said network condition is associated with said client.

## Patentansprüche

1. Ein Verfahren (300) zum Verwalten eines Streaming-Mediendienstes, wobei das Verfahren folgende Schritte aufweist:
Ändern, an einer oder mehreren einer Mehrzahl von Dienstortverwaltungseinrichtungen (120, 122), eines Satzes von Dienstanbietern (130, 132, 134, 136), die durch die jeweilige(n) eine oder mehreren Dienstortverwaltungseinrichtung(en) überwacht werden, wenn eine Rechenlast der jeweiligen einen oder der mehreren Dienstortverwaltungseinrichtung(en) eine Schwelle überschreitet, oder wenn eine gesamte Verfügbarkeit von Ressourcen innerhalb einer Kategorie über alle Dienstanbieter unter eine zweite Schwelle fällt;
Empfangen einer Anforderung (302) nach einem Streaming-Mediendienst von einem Client (150), wobei der Streaming-Mediendienst eine Mediendienstkomponente aufweist;
Auswählen (304) einer Dienstortverwaltungseinrichtung (120), der die Anforderung zu liefern ist, aus der Mehrzahl von Dienstortverwaltungseinrichtungen (120 und 122);
Auswählen (306) eines Dienstanbieters aus dem Satz von Dienstanbietern (130, 132, 134, 136), die durch die ausgewählte Dienstortverwaltungseinrichtung (120) überwacht werden, der die Mediendienstkomponente zuzuweisen ist, durch die ausgewählte Dienstortverwaltungseinrichtung (120); und
Informieren (308) des Dienstanbieters (130) über die Zuweisung, um die Mediendienstkomponente auszuführen, was bewirkt, dass sich der Dienstanbieter vorbereitet, um den Streaming-Mediendienst an Streaming-Medien durchzuführen.

2. Das Verfahren gemäß Anspruch 1, bei dem das Auswählen (304) der Dienstortverwaltungseinrichtung folgende Schritte aufweist: Beibehalten einer Aufzeichnung, die identifizierende Informationen einer Dienstortverwaltungseinrichtung unter der Mehrzahl von Dienstortverwaltungseinrichtungen aufweist; und Auswählen der Dienstortverwaltungseinrichtung gemäß der Aufzeichnung.

3. Das Verfahren gemäß Anspruch 1, bei dem das Auswählen (304) der Dienstortverwaltungseinrichtung folgende Schritte aufweist: Beibehalten einer Aufzeichnung, die eine priorisierte Liste eines Satzes von verfügbaren Dienstortverwaltungseinrichtungen unter der Mehrzahl von Dienstortverwaltungseinrichtungen aufweist; und Auswählen der Dienstortverwaltungseinrichtung gemäß der Prioritätsreihenfolge der Liste der Aufzeichnung.

4. Das Verfahren gemäß Anspruch 1, bei dem das Auswählen (304) der Dienstortverwaltungseinrichtung folgende Schritte aufweist: Beibehalten einer Aufzeichnung, die identifizierende Informationen für einen Satz von verfügbaren Dienstortverwaltungseinrichtungen unter der Mehrzahl von Dienstortverwaltungseinrichtungen aufweist; und zufälliges Auswählen der Dienstortverwaltungseinrichtung aus der Aufzeichnung.

5. Das Verfahren gemäß Anspruch 1, bei dem das Auswählen (304) der Dienstortverwaltungseinrichtung folgende Schritte aufweist: Beibehalten einer Aufzeichnung, die identifizierende Informationen für einen Satz von verfügbaren Dienstortverwaltungseinrichtungen unter der Mehrzahl von Dienstortverwaltungseinrichtungen aufweist; und Auswählen der Dienstortverwaltungseinrichtung aus der Aufzeichnung, in der Weise eines Zyklischen Umlaufs.

6. Das Verfahren gemäß Anspruch 1, bei dem das Auswählen (304) der Dienstortverwaltungseinrichtung folgende Schritte aufweist: Beibehalten einer Aufzeichnung, die die Verarbeitungslast einer jeden von einem Satz von verfügbaren Dienstortverwaltungseinrichtungen unter der Mehrzahl von Dienstortverwaltungseinrichtungen aufweist; und Auswählen der Dienstortverwaltungseinrichtung, die eine minimale Verarbeitungslast aufweist, aus der Aufzeichnung.

7. Das Verfahren gemäß Anspruch 1, bei dem das Auswählen (304) durch ein Portal (140) durchgeführt wird.

8. Das Verfahren gemäß Anspruch 1, bei dem das Auswählen (304) der Dienstortverwaltungseinrichtung auf der Dienstortverwaltungseinrichtung basiert, die die kürzeste ausstehende Anforderungswarteschlange, die niedrigste erwartete Latenz bei einem Bedienen der Anforderung oder die größte aktuell verfügbare Kommunikationsbandbreite aufweist.

9. Das Verfahren gemäß Anspruch 1, bei dem das Auswählen (304) der Dienstortverwaltungseinrichtung auf einer Netzwerkbedingung basiert.

10. Das Verfahren gemäß Anspruch 9, bei dem die Netzwerkbedingung dem Client zugeordnet ist.

## Revendications

1. Procédé (300) de gestion d'un service de transmission multimédia en continu, ledit procédé comprenant les étapes consistant à :
changer, au niveau d'un ou plusieurs d*'*une pluralité de gestionnaires d'emplacement de service (120, 122), un ensemble de fournisseurs de service (130, 132, 134, 136) supervisés par les un ou plusieurs gestionnaires d'emplacement de service respectifs lorsqu'une charge de calcul des un ou plusieurs gestionnaires d'emplacement de service respectifs excède un seuil ou lorsqu'une disponibilité totale des ressources, au sein d'une certaine catégorie, sur tous les fournisseurs de service tombe sous un second seuil ;
recevoir une demande (302) pour un service de transmission multimédia en continu d'un client (150), ledit service de transmission multimédia en continu comprenant un composant de service de multimédia ;
sélectionner (304) un gestionnaire d'emplacement de service (120) auquel fournir ladite demande à partir de la pluralité des gestionnaires d'emplacement de service (120 et 122) ;
sélectionner (306) par le gestionnaire d'emplacement de service sélectionné (120) un fournisseur de service à partir de l'ensemble de fournisseurs de service (130, 132, 134, 136) supervisés par le gestionnaire d'emplacement de service sélectionné (120) auquel attribuer ledit composant de service de multimédia ; et
informer (308) ledit fournisseur de service (130) de ladite attribution pour effectuer ledit composant de service de multimédia, amenant ledit fournisseur de service à se préparer à effectuer ledit service de transmission multimédia en continu sur le média en continu.

2. Procédé selon la revendication 1, dans lequel ladite sélection (304) dudit gestionnaire d'emplacement de service comprend les étapes consistant à : conserver un enregistrement comprenant l'identification d'informations d'un gestionnaire d'emplacement de service parmi ladite pluralité de gestionnaires d'emplacement de service ; et sélectionner ledit gestionnaire d'emplacement de service selon ledit enregistrement.

3. Procédé selon la revendication 1, dans lequel ladite sélection (304) dudit gestionnaire d'emplacement de service comprend les étapes consistant à : conserver un enregistrement comprenant une liste classée par priorité d'un ensemble de gestionnaires d*'*emplacement de service disponibles parmi ladite pluralité de gestionnaires d'emplacement de service ; et sélectionner ledit gestionnaire d'emplacement de service selon l'ordre de priorité de ladite liste dudit enregistrement.

4. Procédé selon la revendication 1, dans lequel ladite sélection (304) dudit gestionnaire d'emplacement de service comprend les étapes consistant à : conserver un enregistrement comprenant l'identification d'informations pour un ensemble de gestionnaires d'emplacement de service disponibles parmi ladite pluralité de gestionnaires d'emplacement de service ; et sélectionner ledit gestionnaire d'emplacement de service au hasard à partir dudit enregistrement.

5. Procédé selon la revendication 1, dans lequel ladite sélection (304) dudit gestionnaire d'emplacement de service comprend les étapes consistant à : conserver un enregistrement comprenant l'identification d'informations pour un ensemble de gestionnaires d'emplacement de service disponibles parmi ladite pluralité de gestionnaires d'emplacement de service ; et sélectionner ledit gestionnaire d'emplacement de service à tour de rôle à partir dudit enregistrement.

6. Procédé selon la revendication 1, dans lequel ladite sélection (304) dudit gestionnaire d'emplacement de service comprend les étapes consistant à : conserver , un enregistrement comprenant la charge de traitement de chacun d'un ensemble de gestionnaires d'emplacement de service disponibles parmi ladite pluralité de gestionnaires d'emplacement de service ; et sélectionner ledit gestionnaire d'emplacement de service à partir dudit enregistrement ayant une charge de traitement minimale.

7. Procédé selon la revendication 1, dans lequel ladite sélection (304) est effectuée par un portail (140).

8. Procédé selon la revendication 1, dans lequel ladite sélection (304) dudit gestionnaire d'emplacement de service est basée sur le gestionnaire d'emplacement de service ayant la file d'attente de demandes en attente la plus , courte, la latence attendue la plus basse dans la desserte de ladite demande ou bien la largeur de bande de communication la plus grande actuellement disponible.

9. Procédé selon la revendication 1, dans lequel ladite sélection (304) dudit gestionnaire d'emplacement de service est basée sur une condition de réseau.

10. Procédé selon la revendication 9, dans lequel ladite condition de réseau est associée audit client.
